# EUROPEAN PATENT APPLICATION

(11) **EP 3 264 671 A1**
(43) Date of publication of application: **03.01.2018**
(21) Application number: 15883314.5
(22) Date of filing: 26.10.2015
(51) Int. Cl.: H04L 9/14, G06F 21/60, H04L 9/08

(54) **KEY REPLACEMENT DIRECTION CONTROL SYSTEM, AND KEY REPLACEMENT DIRECTION CONTROL METHOD**

(30) Priority: 26.02.2015 JP 2015036058
(71) Applicant: Hitachi Information & Telecommunication Engineering, Ltd., Kanagawa 220-6122 (JP)
(72) Inventor: SATO, Hisayoshi, Tokyo 100-8280 (JP); NAKAMURA, Kiminori, Yokohama-shi Kanagawa 220-6122 (JP); MURAKAMI, Takeo, Yokohama-shi Kanagawa 220-6122 (JP)
(74) Representative: MERH-IP Matias Erny Reichl Hoffmann Patentanwälte PartG mbB
(86) International application number: PCT/JP2015/080082
(87) International publication number: WO 2016/136024

(57) **Abstract**

To enable multiple key replacements for information sharing between users and control of the key replacement directions, a key replacement direction control system 100 at least has a key replacement server 200 including: a storage part 220 that stores key replacement information defining a relation indicating permission and direction of information sharing between users, a replacement key for use to re-encrypt encrypted data of a first user to enable a second user to decrypt the encrypted data with a decryption key retained by the second user, and encrypted data of users; and an arithmetic device 210 that receives a transmission request from a user terminal, and if the key replacement information defines that information sharing in a direction from a certain user to a different user is permitted, re-encrypts encrypted data of the certain user using the replacement key for the users thus defined and transmits the re-encrypted encrypted data to the user terminal of the different user.

## Description

### [Technical Field]

The present invention relates to a key replacement direction control system and a key replacement direction control method, and specifically relates to a technique for enabling multiple key replacements for information sharing between users, and control of the key replacement directions.

### [Background Art]

Encryption technology is a method for enabling information exchange over a network without interception by an outsider. In recent years, there has been widely used a system where an information owner and an information receiver exchange information with intermediation of a third party other than them. Such a system is typified by a cloud system. In such a cloud system, when an administrator of the cloud is malicious, it is difficult to prevent information leak on the cloud only by encrypting communication between an information owner and the cloud and between the cloud and an information receiver.

Thus, information encryption between an information owner and an information receiver, namely, end-to-end encryption is desirable. End-to-end encryption requires the information owner to take some measure when encrypting its information so that the information receiver can decrypt the encrypted information.

In an example where symmetric-key cryptography is employed as such a measure among conventional encryption techniques, the information owner (transmitter) needs to share an encryption/decryption key with the information receiver at some time point. Further, if there are many transmitters and receivers, many keys have to be shared and confidentially managed. This may pose issues in terms of system operability and security.

If public-key cryptography is employed, on the other hand, the key management issue in the symmetric-key cryptography is diminished because encryption keys can be published. However, as in the case of employing the symmetric-key cryptography, the public-key cryptography still requires an information owner to, in encryption before transmitting information, determine an information receiver and encrypt the information with a key corresponding to the information receiver.

A cloud storage, for example, has to be able to provide a use environment where an information owner uploads encrypted data to the cloud storage, and a user who wishes to (and is authorized to) use the data downloads, decrypts, and uses the data. However, conventional encryption techniques cannot establish such a use environment because the conventional encryption techniques need a transmitter to perform encryption specific to a particular receiver when uploading data.

In this regard, a technique called key replacement or re-encryption has been proposed and drawing attention as a secure information sharing technique. The following re-encryption system is an example of such information sharing technique (see, for example, PTL 1). The re-encryption system includes a file sharing apparatus and a re-encryption apparatus that are communicative with client apparatuses operated by members of a group. The file sharing apparatus stores first encrypted files, which are files encrypted based on a public key of the group, receives a request for a certain file from a member of the group, acquires the first encrypted file of the requested file, transmits a request to re-encrypt this file to the re-encryption apparatus, receives a second encrypted file, which is a file encrypted based on a public key of the member, from the re-encryption apparatus, and transmits the second encrypted file to the client apparatus. The re-encryption apparatus receives a request to re-encrypt a first encrypted file, acquires a re-encryption key corresponding to the requesting member, re-encrypts the first encrypted file into a second encrypted file based on this re-encryption key, and transmits the second encrypted file to the file sharing apparatus. The re-encryption apparatus decrypts a second encrypted file received from the file sharing apparatus based on a private key corresponding to the public key of the member, thereby obtaining the target file.

### [Citation List]

### [Patent Literature]

[PTL 1] WO2013069505

### [Summary of Invention]

### [Technical Problem]

However, the conventional re-encryption technique described above cannot handle a situation where complicated considerations need to be made about directions of information encryption and decryption between information sharing players, such as a case where information access authorities of the players are hierarchical. Moreover, re-encryption is possible only once, and in order to perform two-stage re-encryption or key replacement of information, the information needs to be decrypted first. This lowers processing efficiency and increases risk of information leak upon the decryption. In any case, this is not desirable.

Meanwhile, there is also an approach for enabling key replacement multiple times by performing a commutative operation such as for example a bitwise exclusive OR, in which altering the input order of the operands does not change the result. This approach allows key replacement with a limited number of keys to handle.

In such a key replacement approach using the commutative property of an operation, however, when it is possible to perform key replacement on data encrypted by user A to enable user B to decrypt the encrypted data, it is also possible to perform key replacement on data encrypted by user B to enable user A to decrypt the encrypted data. In other words, key replacement directions between concerned users are symmetric.

Such symmetry means that when a third party such as a cloud administrator is commissioned to perform key replacement, the cloud administrator can perform, without permission, key replacement in a direction which is not actually permitted. Further, collusion between a cloud administrator and a certain (legitimate) user may cause important information owned by another user, such as its encryption key, to leak from information used for key replacement. Thus, the above approach has a problem of being vulnerable to such a colluding attack.

For these reasons, the present invention aims to provide a technique for enabling multiple key replacements for information sharing between users, and control of the key replacement directions.

### [Solution to Problem]

A key replacement direction control system of the present invention for solving the above problem is characterized in that the system comprises a key replacement server including: a storage device that stores key replacement information defining a relation indicating permission and direction of information sharing between users, a replacement key for a first user and a second user who are defined in the key replacement information such that information sharing in a direction from the first user to the second user is permitted, the replacement key being for use to re-encrypt encrypted data of the first user to enable the second user to decrypt the encrypted data using a decryption key retained by the second user, and encrypted data of at least one of the users; and an arithmetic device that receives a transmission request for transmission of encrypted data of a certain user, from a user terminal of a different user, if the key replacement information defines that information sharing in a direction from the certain user to the different user is permitted, re-encrypts the encrypted data of the certain user using the replacement key for the users thus defined, and transmits the re-encrypted encrypted data to the user terminal of the different user.

A key replacement direction control method of the present invention is characterized in that the method is executed by a key replacement server that includes a storage device that stores key replacement information defining a relation indicating permission and direction of information sharing between users, a replacement key for a first user and a second user who are defined in the key replacement information such that information sharing in a direction from the first user to the second user is permitted, the replacement key being for use to re-encrypt encrypted data of the first user to enable the second user to decrypt the encrypted data using a decryption key retained by the second user, and encrypted data of at least one of the users, and the method comprises: receiving a transmission request for transmission of encrypted data of a certain user, from a user terminal of a different user; if the key replacement information defines that information sharing in a direction from the certain user to the different user is permitted, re-encrypting the encrypted data of the certain user using the replacement key for the users thus defined; and transmitting the re-encrypted encrypted data to the user terminal of the different user.

### [Advantageous Effects of Invention]

The present invention enables multiple key replacements for information sharing between users, and control of the key replacement directions.

### [Brief Description of Drawings]

[Fig. 1] Fig. 1 is a diagram showing an example configuration of an encryption key replacement system according to a first embodiment.
[Fig. 2] Fig. 2 is a diagram showing an example configuration of a key replacement server according to the first embodiment.
[Fig. 3] Fig. 3 is a diagram showing an example configuration of a user terminal according to the first embodiment.
[Fig. 4] Fig. 4 is a diagram showing an example configuration of a key generation server according to the first embodiment.

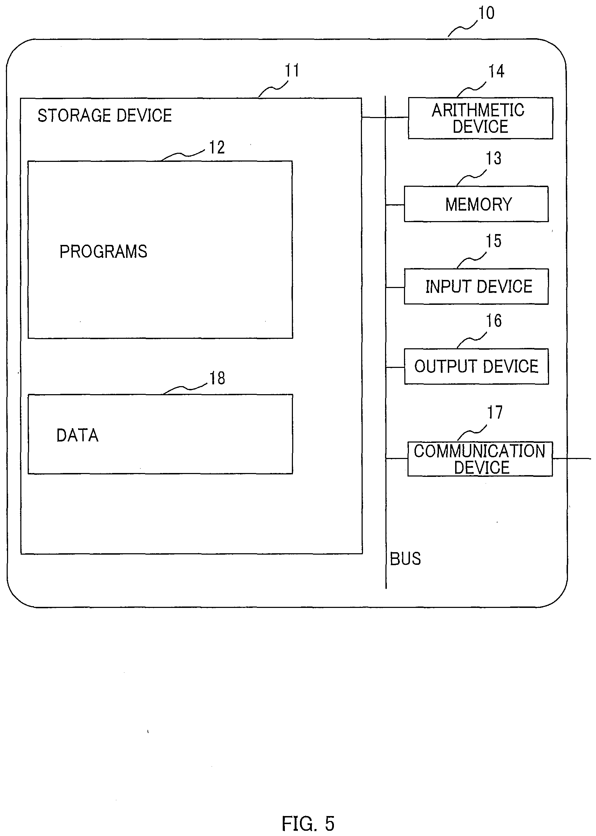

[Fig. 5] Fig. 5 is a diagram showing an example hardware configuration of a key replacement direction control system according to the first embodiment.
[Fig. 6] Fig. 6 is a diagram showing an example of a key replacement graph according to the first embodiment.
[Fig. 7] Fig. 7 is a diagram showing an example of a replacement key table according to the first embodiment, the replacement key table corresponding to the key replacement graph.
[Fig. 8] Fig. 8 is a flowchart illustrating Procedure Example 1 of a key replacement direction control method according to the first embodiment.
[Fig. 9] Fig. 9 is a flowchart illustrating Procedure Example 2 of the key replacement direction control method according to the first embodiment.
[Fig. 10] Fig. 10 is a flowchart illustrating Procedure Example 3 of the key replacement direction control method according to the first embodiment.
[Fig. 11] Fig. 11 is a flowchart illustrating Procedure Example 4 of the key replacement direction control method according to the first embodiment.
[Fig. 12] Fig. 12 is a flowchart illustrating Procedure Example 5 of the key replacement direction control method according to the first embodiment.
[Fig. 13] Fig. 13 is a diagram showing a user hierarchy model according to a second embodiment.
[Fig. 14] Fig. 14 is a diagram illustrating an information consolidation model according to a third embodiment.

### [Description of Embodiments]

### [Embodiment 1]

### ---System Configuration---

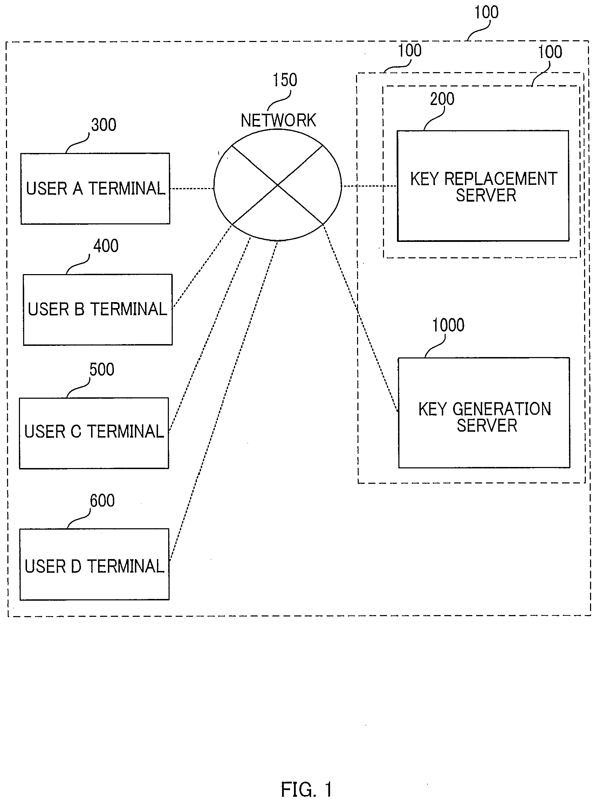

A detailed description is given below of an embodiment of the present invention using the drawings. Fig. 1 is a diagram of the configuration of a network including a key replacement direction control system 100 of a first embodiment. The key replacement direction control system 100 shown in Fig. 1 is a computer system that enables multiple key replacements for information sharing between users, and control of the key replacement directions.

The key replacement direction control system 100 exemplified in Fig 1 is configured such that a key replacement server 200 run by an encrypted-data storage and key replacement service provider, user terminals 300 to 600 owned by users that entrust encrypted data to the key replacement server 200 and access encrypted data on the key replacement server 200, and a key generation server 1000 of a key generation and transmission service provider generating and transmitting key such as a decryption key and a replacement key are coupled to one another via a network 150.

However, in a possible minimum configuration, the key replacement direction control system 100 may include only the key replacement server 200. In yet another possible configuration, the key replacement direction control system 100 may include the key replacement server 200 and the key generation server 1000.

In a possible scenario, the key replacement server 200 is managed and operated by a cloud provider as a main body of providing a cloud service that intermediates exchange of encrypted data. In such a case, terminals, such as mobile phones, owned by users of the cloud service provided by the cloud provider correspond to the above-mentioned user terminals 300 to 600. The number of the user terminals is not limited to the one exemplified in Fig. 1.

Next, the functional configurations of the apparatuses in the key replacement direction control system 100 are described. As mentioned above, each functional part to be described below may be taken as a function implemented by execution of a program stored in its host apparatus or a function implemented by an appropriate electric circuit.

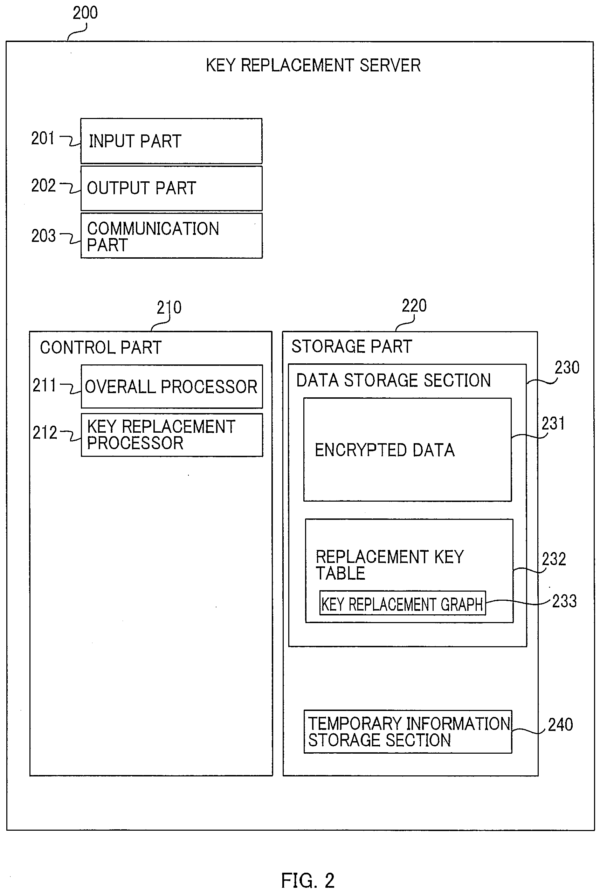

Fig. 2 is a schematic function diagram showing an example of the configuration of the key replacement server 200 according to the first embodiment. As exemplified in Fig. 2, the key replacement server 200 includes a control part 210 that executes various types of processing, a storage part 220 that stores data, an input part 201 that receives information input from outside, an output part 202 that outputs information to an output device or the like, and a communication part 203 that exchanges data with an external apparatus.

The control part 210 includes an overall processor 211 and a key replacement processor 212. Of these, the overall processor 211 takes overall control of the processing performed by the key replacement server 200, such as storing information received via the input part 201 into the storage part 220 or exchanging information with the user terminals 300 to 600. Other processing performed by the overall processor 211 include displaying data on the output part 202, or reading data stored in the storage part 220 and then transmitting the data to the user terminal 300 to 600 via the communication part 203.

On the other hand, the key replacement processor 212 is configured to operate as follows upon receipt of a transmission request targeting encrypted data of a first user and coming from a second user different from the first user. When the replacement key table 232 defines that information sharing is permitted in a direction from the first user to the second user, the key replacement processor 212 re-encrypts the encrypted data of the first user (read from the encrypted data 231) using a replacement key corresponding to the users thus defined, and transmits the re-encrypted encrypted data to the user terminal of the second user.

The encrypted data 231 and the replacement key table 232 are stored in a data storage section 230 of the storage part 220. Of these, the encrypted data 231 is encrypted data received from the user terminals 300 to 600. The replacement key table 232 corresponds to key replacement information defining relations indicating permission and direction of information sharing between users. This key replacement information may be a key replacement graph 233 having vertices representing identification information on the users and edges each representing the relation indicating permission and direction and information sharing between the users.

In a temporary information storage section 240, information temporarily needed for processing by the control part 210 is stored.

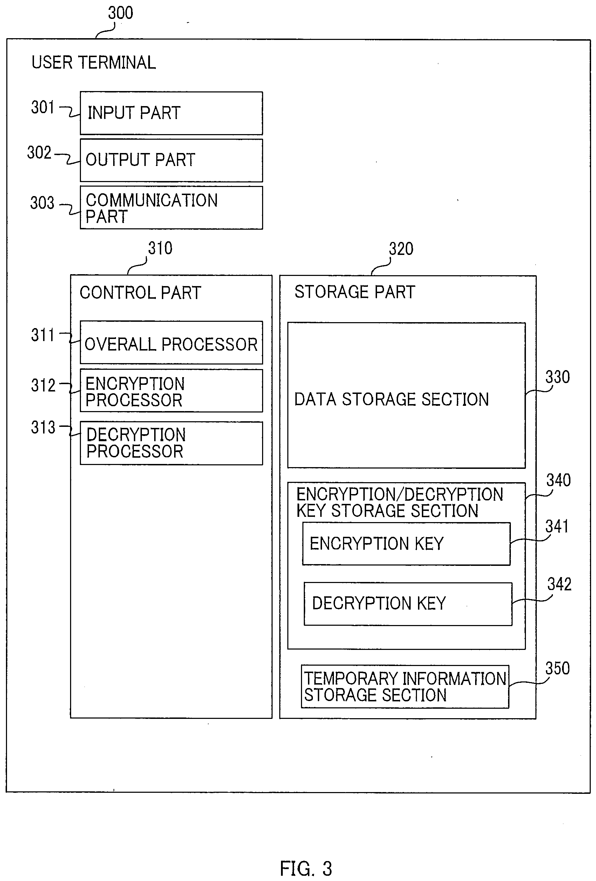

Next, a description is given of the user terminal 300. Fig. 3 is a diagram showing an example configuration of the user terminal 300 owned by user A, according to the first embodiment. Unless a particular user is to be specified, a user terminal is referred to as the user terminal 300 (the same applies hereinafter). Thus, the user terminal 300 shown in Fig. 3 has the same configuration as the other user terminals 400 to 600.

The user terminal 300 exemplified in Fig. 3 includes a control part 310 that executes various types of processing, a storage part 320 that stores data, an input part 301 that receives information input from outside, an output part 302 that outputs information to an output device or the like, and a communication part 303 that exchanges data with an external apparatus.

The control part 310 includes an overall processor 311, an encryption processor 312, and a decryption processor 313. Of these, the overall processor 311 takes overall control of the processing performed by the user terminal 300, such as storing information received via the input part 301 into the storage part 320 and exchanging information with the key replacement server 200. Other processing executed by the overall processor 311 include displaying data on the output part 302, reading data stored in the storage part 320 and then causing the encryption processor 312 to encrypt the data, causing the decryption processor 313 to decrypt encrypted data, and transmitting encrypted data to the key replacement server 200 via the communication part 303.

The encryption processor 312 registers encrypted data at the key replacement server 200 as follows. The encryption processor 312 generates ciphertext by encrypting encryption target data (retained in the data storage section 330) of a user of the user terminal 300 (user A in this case) using a public-key cryptography key generated by a predetermined algorithm. Then, the encryption processor 312 performs a predetermined commutative operation on the symmetric-key cryptography key and an encryption private key retained as encryption key 341, and joins a result of the operation to the ciphertext. The encryption processor 312 thereby generates encrypted data and transmits the encrypted data to the key replacement server 200.

The decryption processor 313 decrypts encrypted data of an information sharer user, which has been re-encrypted using a replacement key and acquired from the key replacement server 200 in response to a transmission request targeting the encrypted data. Specifically, the decryption processor 313 decrypts the encrypted data by performing a predetermined commutative operation on a decryption key retained as decryption key 342 in an encryption/decryption key storage section 340 and used by the user of the user terminal 300 to decrypt the encrypted data of the information sharer user, and an operation result portion of the re-encrypted encrypted data, which is joined to ciphertext therein, and decrypting the ciphertext using a result of the operation as a symmetric-key cryptography decryption key. The decryption processor 313 then outputs the decrypted data to a predetermined output device via the output part 302.

The storage part 320 includes the data storage section 330, the encryption/decryption key storage section 340, and a temporary information storage section 350. Of these, the data storage section 330 has stored therein encryption target data, or in other words, plaintext data. The encryption/decryption key storage section 340 stores encryption and decryption keys. The encryption key 341 is an encryption private key transmitted from the key generation server 1000. The decryption key 342 includes a decryption master key and a decryption key that are, again, transmitted from the key generation server 1000.

The temporary information storage section 350 stores information temporarily needed for processing performed by the control part 310.

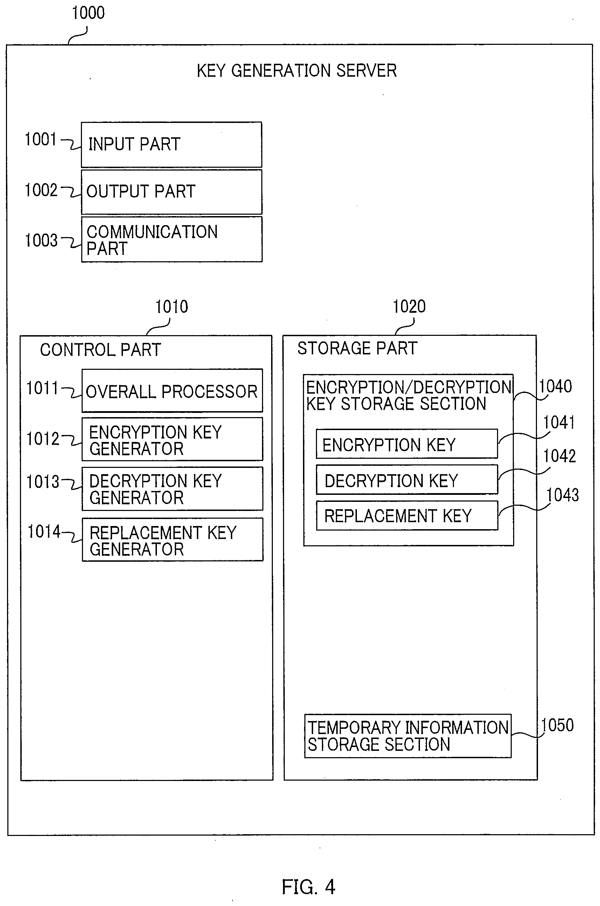

Next, a description is given of the key generation server 1000. Fig. 4 is a diagram showing an example configuration of the key generation server 1000 according to the first embodiment. As exemplified in Fig. 4, the key generation server 1000 includes a control part 1010 that executes various types of processing, a storage part 1020 that stores data, an input part 1001 that receives information input from outside, an output part 1002 that outputs information to an output device or the like, and a communication part 1003 that exchanges data with an external device.

The control part 1010 includes an overall processor 1011, an encryption key generator 1012, a decryption key generator 1013, and a replacement key generator 1014. Of these, the overall processor 1011 takes overall control of the processing performed by the key generation server 1000, such as storing information received via the input part 1001 into the storage part 1020 and exchanging information with the user terminals 300 to 600 and the key replacement server 200.

Other processing executed by the overall processor 1011 includes displaying data on the output part 1002 and reading data stored in the storage part 1020 and then causing the encryption key generator 1012 to generate an encryption key, causing the decryption key generator 1013 to generate a decryption key, and causing the replacement key generator 1014 to generate a replacement key. The overall processor 1011 transmits the thus-generated encryption key and decryption key to the corresponding user terminal 300 to 600 and the replacement key to the key replacement server 200.

The encryption key generator 1012 generates an encryption private key and a decryption master key for each user by using a predetermined algorithm.

The decryption key generator 1013 generates a decryption key with which encrypted data of a first user is decrypted by a second user. Specifically, the decryption key generator 1013 generates a decryption key by using the decryption master key of the second user and a hash code in identification information on the first user (which is, for example, a user ID or the like and stored in the storage part 1020 in advance).

The replacement key generator 1014 performs processing of generating, as key replacement information, a key replacement graph having vertices representing identification information on the users and edges each representing the relation indicating permission and direction of information sharing, and transmits the key replacement graph to the key replacement server 200. With respect to a first user and a second user who are, in the key replacement graph, linked to each other directly with an edge directed from the first user to the second user, the replacement key generator 1014 generates a replacement key 1043 for use to re-encrypt encrypted data of the first user to enable the second user to decrypt the encrypted data. Specifically, the replacement key generator 1014 performs a predetermined commutative operation on: a decryption key 1042 for use by the second user to decrypt encrypted data of the first user and an encryption private key 1041 of the first user, and uses a result of the operation as the replacement key 1043 for use to re-encrypt encrypted data of the first user to enable the second user to decrypt the encrypted data.

The storage part 1020 includes an encryption/decryption key storage section 1040 and a temporary information storage section 1050. Of these, the encryption/decryption key storage section 1040 stores an encryption key 1041, the decryption key 1042, and the replacement key 1043.

The temporary information storage section 1050 stores information temporarily needed for processing performed by the control part 1010.

### ---Hardware Configuration---

The following describes a hardware configuration of a computer 10 typifying each apparatus of the key replacement direction control system 100 of the present embodiment. The computer 10 includes a storage device 11 formed of an appropriate non-volatile storage element such as a solid state drive or a hard disk drive, a memory 13 formed of a volatile storage element such as a RAM, an arithmetic device 14, such as a CPU, that takes overall control of the host apparatus by, for example, loading programs 12 stored in the storage device 11 into the memory 13 and executing the programs 12, and also performs various types of processing for determination, computation, and control by using data 18 appropriately, an input device 15 that receives key input and voice input made from outside, an output device 16, such as a display, that displays processed data, and a communication device 17 that is coupled to a network 150 and performs processing for communication with other apparatuses.

Of these, resources for the storage device 11 serve as the storage part of each apparatus, resources for the arithmetic device 14 serve as the control part of each apparatus, resources for the input device 15 serve as the input part of each apparatus, resources for the output device 16 serve as the output part of each apparatus, and resources for the communication device 17 serve as the communication part of each apparatus. The data 18 corresponds to the data stored in the storage part of each apparatus.

### ---Data Structure Example---

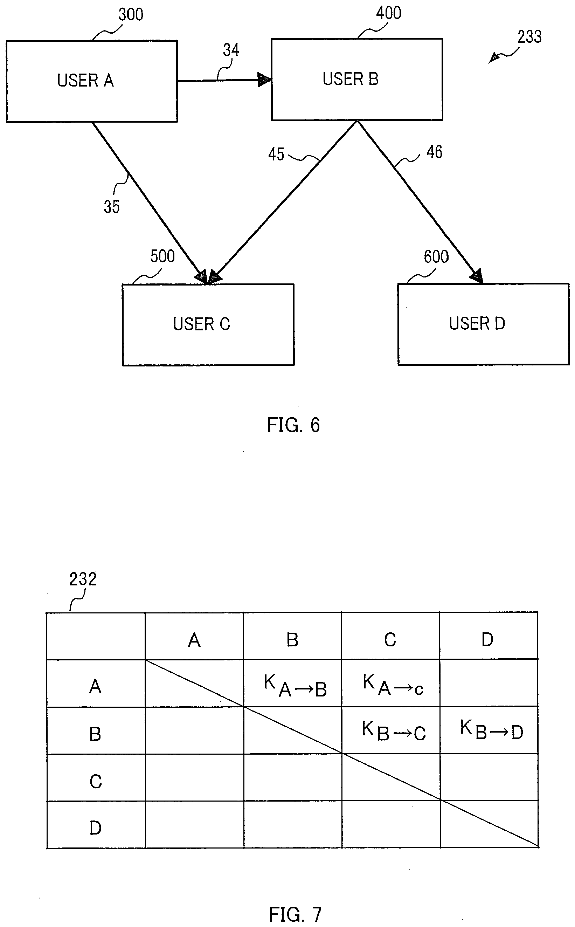

Next, an example of data structure used in the key replacement direction control system 100 of the first embodiment is described. In this regard, concrete examples of a key replacement graph and a corresponding replacement key table are shown. Fig. 6 is a diagram showing an example of the key replacement graph 233 according to the first embodiment, and Fig. 7 is a diagram showing an example of the replacement key table 232 corresponding to the key replacement graph 233, according to the first embodiment.

The key replacement graph 233 exemplified in Fig. 6 shows directions among the user terminals 300 to 600 in which key replacement is permitted, or in other words, the directions of information sharing. The replacement key table 232 in Fig. 7 is a table format version of the key replacement graph 233. The replacement key table 232 retains a replacement key for each pair of user terminals for whom information sharing from one to the other is permitted.

In Fig. 6, a line segment (edge) between, for example, user A and user B is an arrow directed from user A to user B. This indicates that the key replacement server 200 can perform key replacement on encrypted data of user A to enable user B to decrypt the encrypted data. Likewise, line segments which are arrows directed from user B to user C and from user B to user D indicate that the key replacement server 200 can perform key replacement on encrypted data of user B to enable user C and user D to decrypt the encrypted data.

Fig. 7 shows an example of the replacement key table 232 retaining replacement keys generated according to the respective relations shown in the key replacement graph 233, indicating whether key replacement, i.e., information sharing is permitted. For example, K_{A→B} is information needed for the key replacement server 200 to perform key replacement (re-encryption) on encrypted data of user A to enable user B to decrypt the encrypted data. In the replacement key table 232, a blank cell indicates that information sharing or key replacement between the users corresponding to the cell is not permitted in the direction indicated by the cell.

### ---Key Generation and Transmission Processing---

An actual procedure of a key replacement direction control method of this embodiment is described below with reference to a drawing. Various actions involved in the key replacement direction control method described below are implemented when a corresponding apparatus forming the key replacement direction control system 100 loads a corresponding program into memory or the like and executes the program. Each program is formed by codes for implementing a corresponding one of the various actions to be described below.

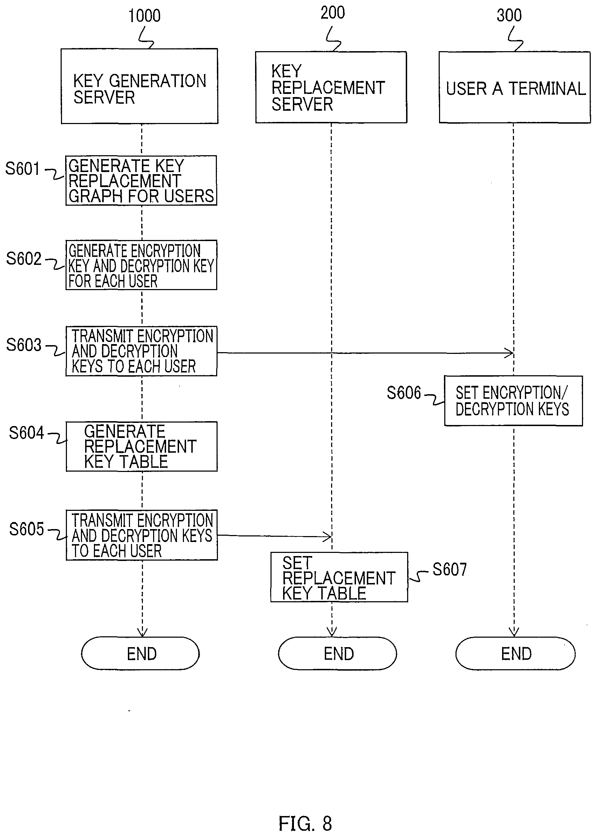

Fig. 8 is a flowchart showing Procedure Example 1 of the key replacement direction control method according to the present embodiment, and more specifically, a flowchart illustrating a procedure in which the key generation server 1000 according to the first embodiment generates encryption keys and decryption keys to be retained by users 300 to 600 and the replacement key table 232 to be retained by the key replacement server 200.

First, the key generation server 1000 generates the key replacement graph 233 by linking vertices representing identification information on each pair of users, which are stored in the storage part 1020 in advance, with a line segment according to the relation indicating permission and direction of information sharing between the users, the relation being designated by an administrator or the like via the input part 1001 for example (S601). The key replacement graph 233 may be transmitted to the key replacement server 200 in this form.

Next, the key generation server 1000 generates an encryption key and a decryption key for each user according to the key replacement graph 233 (S602) . A detailed description of this processing will be given later.

Next, the key generation server 1000 transmits the encryption key and the decryption key generated for each user in Step S602 to the user terminal 300 of the corresponding user (S603) . This transmission must be carried out by encrypted communication or the like to prevent interception by an outsider.

On the other hand, the user terminal 300 receives the encryption key and the decryption key from the key generation server 1000 and stores them respectively as the encryption key 341 and the decryption key 342 in the encryption/decryption key storage section 340 in the storage part 320 (S606).

Then, the key generation server 1000 generates replacement keys based on the key replacement graph 233 and the encryption key and the decryption key generated for each user in Step S602, and generates the replacement key table 232 by storing the replacement keys in a table in a predetermined format defining relations indicating permission and direction of information sharing between users (S604).

Next, the key generation server 1000 transmits the replacement key table 232 generated in Step S604 to the key replacement server 200 (S605). This transmission must be carried out by encrypted communication or the like to prevent interception by an outsider.

On the other hand, the key replacement server 200 receives the replacement key table 232 from the key generation server 1000 and stores this in the storage part 220 (S607).

### ---Encryption, Key Replacement, and Decryption Processing---

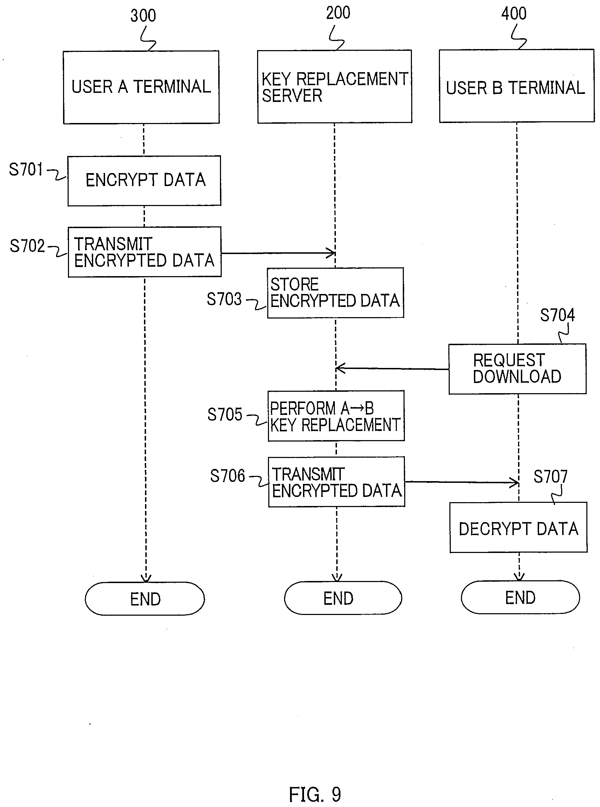

Next, a description is given of a procedure in which the user terminal 300 of user A encrypts data of user A and transmits the encrypted data to the key replacement server 200 which in turn performs key replacement on the encrypted data to generate encrypted data which can be decrypted by the user B 400 and transmits the encrypted data to user B 400 which in turn decrypts the encrypted data. Fig. 9 is a flowchart illustrating Procedure Example 2 of the key replacement direction control method according to the first embodiment.

First, the user terminal 300 of user A generates encrypted data (S701) . Specifically, the user terminal 300 receives a data encryption instruction from user A at the input part 301 for example, and in response to this instruction, reads encryption target data stored in the data storage section 330. The user terminal 300 then generates ciphertext by encrypting the encryption target data using its own encryption key 341 (public-key cryptography key generated by a predetermined algorithm such as a random number) . The user terminal 300 then performs a predetermined commutative operation on the symmetric-key cryptography key and an encryption private key retained as the encryption key 341, and joins a result of the operation to the ciphertext, thereby generating the encrypted data. The user terminal 300 then transmits this encrypted data to the key replacement server 200 (S702).

Meanwhile, the key replacement server 200 performs key replacement (Step S705). Specifically, in response to a transmission request from the user terminal 400 of user B for example, the key replacement server 200 checks whether information sharing, or key replacement, from user A to user B is permitted by referring to the key replacement graph 233 (Fig. 6) or the replacement key table 232 (Fig. 7) retained in the data storage section 230. When the key replacement is permitted, the key replacement server 200 re-encrypts, and therefore performs key replacement on, the encrypted data of user A by using a replacement key corresponding the defined information sharing from user A to user B, the replacement key being stored in the replacement key table 232 or the like.

The key replacement server 200 transmits the encrypted data which has undergone the key replacement in Step S705, to the user terminal 400 of user B (S706).

Meanwhile, upon receipt of the encrypted data from the key replacement server 200, the user terminal 400 reads the decryption key 342 for use to decrypt the encrypted data of user A from the encryption/decryption key storage section 340, and performs a commutative operation on this decryption key 342 and the operation result portion of the key-replaced (re-encrypted) encrypted data, joined to the ciphertext therein. The user terminal 400 decrypts the ciphertext using a result of the operation as a public-key cryptography decryption key, and outputs the decrypted data to the output part 302 (S707).

### --- Procedure 1 of Generating Encryption Key, Decryption Key, and Replacement Key---

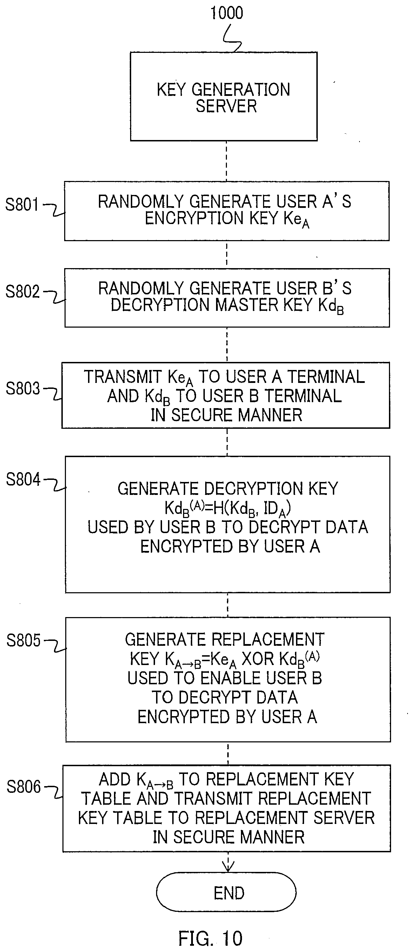

Fig. 10 is a flowchart illustrating Procedure Example 3 of the key replacement direction control method according to the first embodiment, and more particularly, a first procedure in which the key generation server 1000 generates encryption keys, decryption keys, and replacement keys in Fig. 8, according to the first embodiment.

As an example, the following procedure generates an encryption key for user A, decryption keys for user B, and a replacement key to be retained by the key replacement server 200, which are necessary to perform key replacement, or re-encryption, on encrypted data of user A to enable the user terminal 400 of user B to decrypt the encrypted data.

First, the key generation server 1000 randomly generates an encryption key K_{eA} for user A using a predetermined algorithm such as a random number (S801). The key generation server 1000 randomly generates a decryption master key K_{dB} for user B using, again, a predetermined algorithm such as a random number (S802).

Next, in a secure manner, the key generation server 1000 transmits the encryption key K_{eA} obtained in Step S801 to the user terminal of user A, and transmits the decryption master key K_{dB}^{(A)} obtained in Step S802 to the user terminal 400 of user B (S803) .

Next, the key generation server 1000 generates a decryption key for use by the user terminal 400 of user B to decrypt the encrypted data of user A by computation of K_{dB}^{(A)}=H(K_{dB}, ID_{A}) (S804). In this formula, H(*) and ID_{A} are respectively a hash function and the identifier of user A, which are published and stored in the storage part 1020 in advance.

The key generation server 1000 generates a replacement key K_{A→B} for use to re-encrypt the encrypted data of user A to enable the user terminal400 of user B to decrypt the encrypted data, by computing K_{A→B}=K_{eA} XOR K_{dB}^{(A)} (where XOR is a bitwise exclusive OR) (S805). The key generation server 1000 then adds this replacement key K_{A→B} to a corresponding location in the replacement key table (which is stored, for example, as the replacement key 1043 in the storage part 1020), or more specifically, to a cell corresponding to information sharing permitted from user A to user B, and transmits this replacement key table to the key replacement server 200 in a secure manner (S806).

### ---Procedure of Replacement Key Generation---

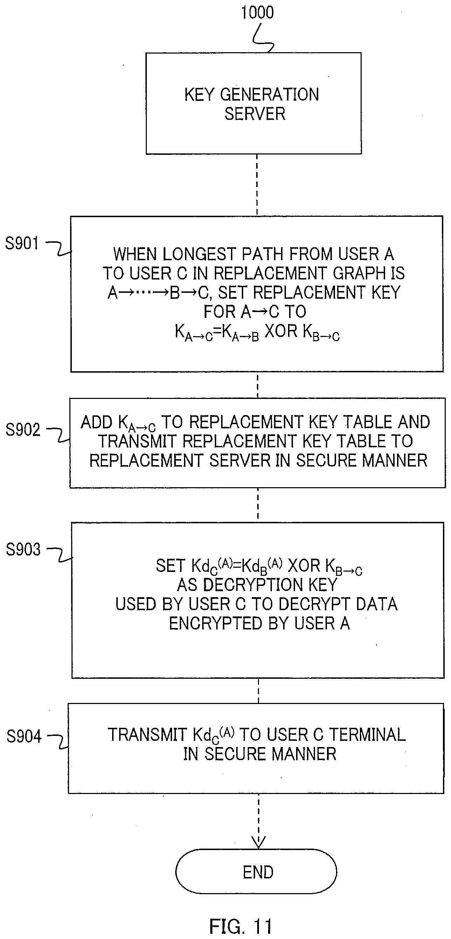

Fig. 11 is a flowchart illustrating Procedure Example 4 of the key replacement direction control method according to the first embodiment, and in particular, a flowchart illustrating a procedure, according to the first embodiment, in which the key generation server 1000 generates replacement keys using a complicated key replacement graph 233.

In the key replacement graph 233 (Fig. 6) of this embodiment, more than one path (edge) on the graph leads user A to user C. The longest path is from user A to user B and then to user C.

In this case, the key generation server 1000 obtains a replacement key K_{A→C} for information sharing from user A to user C by computing K_{A→C}=K_{A→B} XOR K_{B→C} using the already-generated replacement key K_{A→B} and replacement key K_{B→C} (S901) . The key generation server 1000 adds K_{A→C} to the replacement key table and transmits the replacement key table to the key replacement server 200 in a secure manner (S902).

Additionally, the key generation server 1000 obtains a decryption key of user C for use to decrypt the encrypted data of user A, by computing K_{dC}^{(A)}=K_{dB}^{(A)} XOR K_{B→C} (S903), and finally transmits K_{dC}^{(A)} to the user terminal 500 of user C in a secure manner (S904).

### ---Procedure 2 of Generating Encryption Keys, Decryption Keys, and Replacement Keys---

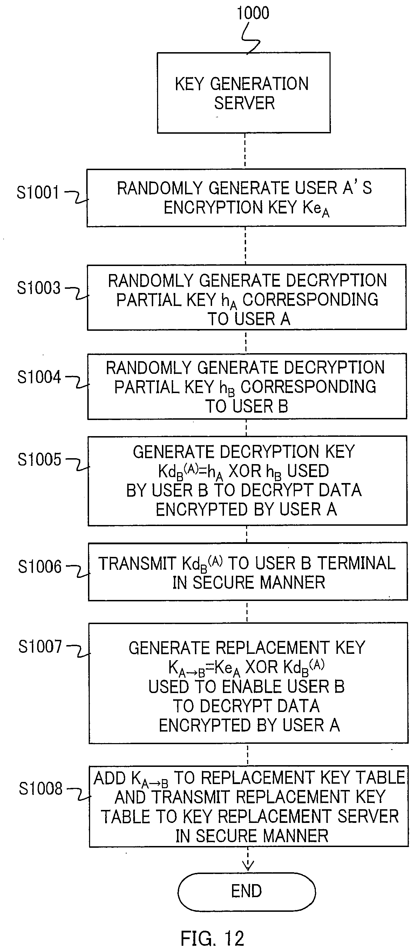

Fig. 12 is a flowchart illustration Procedure Example 5 of the key replacement direction control method according to the first embodiment, and in particular, a flowchart illustrating a second procedure, according to the first embodiment, in which the key generation server 1000 generates encryption keys, decryption keys, and replacement keys in Fig. 8.

As an example, the following procedure generates an encryption key for user A, decryption keys for user B, and a replacement key to be retained by the key replacement server 200, which are necessary to perform key replacement, or re-encryption, on encrypted data of user A to enable the user terminal 400 of user B to decrypt the encrypted data.

First, the key generation server 1000 randomly generates an encryption key K_{eA} for user A using a predetermined algorithm such as a random number (S1001) . The key generation server 1000 randomly generates a decryption partial key h_{A} corresponding to user A using a predetermined algorithm such as a random number (S1003), and likewise, randomly generates a decryption partial key h_{B} corresponding to user B using a predetermined algorithm such as a random number (S1004).

Then, the key generation server 1000 obtains a decryption key for use by user B to decrypt the encrypted data of user A, by computing K_{dB}^{(A)}=h_{A} XOR h_{B} (S1005), and transmits the decryption key K_{dB}^{(A)} to the user terminal 400 of user B in a secure manner (S1006).

Further, the key generation server 1000 computes, using K_{A→B}=K_{eA} XOR K_{dB}^{(A)}, a replacement key for use to re-encrypt encrypted data of user A to enable the user terminal 400 of user B to decrypt the encrypted data (S1007) . The key generation server 1000 then adds the replacement key K_{A→B} to a corresponding location in the replacement key table, and transmits the table to the key replacement server 200 in a secure manner (S1008).

Although the example described above uses an exclusive OR (XOR) on keys, any approach typically involving bit strings and commutative operations defined in a key space may be used.

An example approach for data encryption by the user terminal 300 may involve randomly generating a symmetric-key cryptography key R, generating ciphertext C by encrypting encryption target data using the key R, and using C||X as final ciphertext where X is a result of an exclusive OR, or a predetermined commutative operation, of the key R and an encryption key Ke* of the user terminal (where * is user name). In such a case, key replacement can be accomplished by replacement of the above-described operation result X portion with a result of a predetermined commutative operation performed on the operation result X and the replacement key. Nonetheless, this data encryption approach is of course merely an example, and should not be taken as restrictive.

According to the first embodiment set forth above, when user B is permitted to decrypt encrypted data of user A, but not vice versa, i.e., when the replacement key table 232 does not contain a replacement key for enabling information sharing in a direction from user B to user A, the key replacement server 200 cannot enable, by its own (malicious) decision, user A to decrypt data encrypted by user B. This information-security feature cannot be achieved by a conventional approach based on commutative operations.

In addition, the key replacement processing can be performed without causing discrepancies even when, for example, the key replacement graph 233 derived based on whether information sharing in a defined direction between users is or is not permitted contains complicated relations of information sharing, with an enormous number of users linked with edges in a complex manner, for example. The key replacement graph 233 thus having set therein the relations among users regarding information sharing without discrepancies can avoid a problem where a certain loop existing in the key replacement graph 233 permits key replacement in a direction which is not actually permitted.

Further, appropriately increasing the variations on decryption keys retained by each user can reduce the number of keys of other users that may leak due to collusion between the key replacement server 200 and a certain user (e.g., A). To be more accurate, the other users' keys obtainable by user A are a decryption key corresponding to user A of a user authorized to decrypt data encrypted by user A and an encryption key of a user whose data can be decrypted by user A. These keys do not provide more information than what is already available to user A anyway.

### [Second Embodiment]

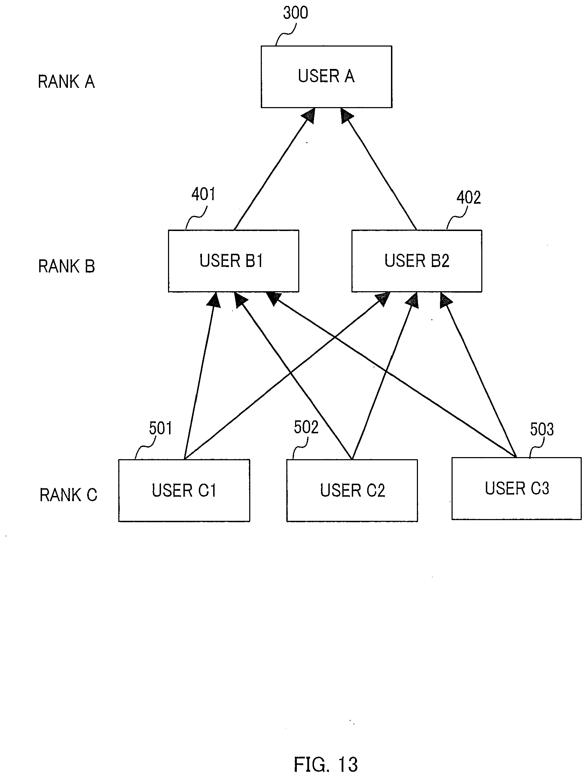

Next, a second embodiment of the present invention is described with reference to Fig. 13. In the second embodiment, the approach of one-directional key replacement (defined in the replacement key table 232 or the like) described in the first embodiment is applied to a hierarchical structure (job positions) of users in an organization. A hierarchical model 1300 exemplified in Fig. 13 is an example where users are divided into three ranks according to their information sharing authorities. The hierarchical model 1300 is generated by the key generation server 1000 as the key replacement graph 233 and transmitted to and then retained by the key replacement server 200. Thus, steps of the key replacement direction control method based on the hierarchical model 1300 of the second embodiment are the same as those in the first embodiment. The hierarchical model 1300 may of course be configured in the same way with two or more than three ranks.

The arrows in the hierarchical model 1300 represent that, for example, the key replacement server 200 can allow the user terminal of a user belonging to rank B or rank A to download, decrypt, and access data encrypted and uploaded to the key replacement server 200 by a user belonging to rank C (user C1 (501), user C2 (502), or user C3 (503) in Fig. 13), by performing key replacement on the data encrypted by the rank C user with a key of the rank B or A user. Similarly, the key replacement server 200 can allow the user terminal of a user belonging to rank A to download, decrypt, and access data encrypted and uploaded to the key replacement server 200 by a user belonging to rank B, by performing key replacement on the data encrypted by the rank B user with a key of the rank A user.

In this hierarchical model 1300, key replacement in an opposite direction is not permitted. Specifically, for example, key replacement cannot be performed on data encrypted by a rank B user with a key of a rank C user.

In the second embodiment, as in the first embodiment, a different key may be used for each user, or a common key may be used among users belonging to the same hierarchy.

### [Third Embodiment]

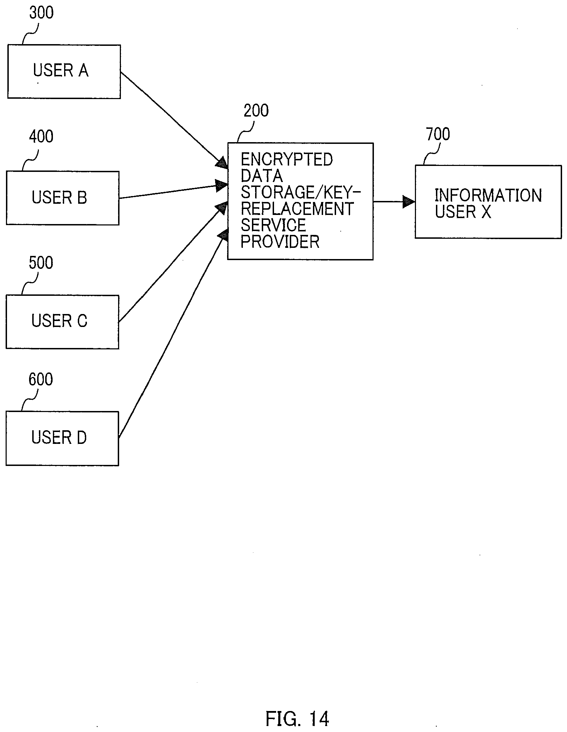

Next, a third embodiment of the present invention is described with reference to Fig. 14. In the third embodiment, the approach of one-directional key replacement (defined in the replacement key table 232 or the like) described in the first embodiment is applied to an information consolidation system.

In the configuration of a hierarchical model 1400 exemplified in Fig. 14, the key replacement server 200 collects encrypted data from the user terminals of four users, A to D, performs key replacement to re-encrypt each encrypted data to enable a terminal 700 of an information user X to decrypt the encrypted data, and transmits the re-encrypted data to the terminal 700 of the information user X. The terminal 700 of the information user X then decrypts and uses the encrypted data. A basic procedure of the key replacement direction control method in the third embodiment is the same as that described in the first embodiment as a specific example.

Arrows in the hierarchical model 1400 indicate that data encrypted and uploaded to the key replacement server 200 by the user terminals 300 to 600 of users A to D cannot be subjected to key replacement to be decrypted among users A to D.

Best modes for carrying out the present invention have been described in detail above, but the present invention is not limited to these modes and can be modified variously without departing from the gist of the present invention.

The embodiments herein discuss a system where a key replacement server converts data encrypted by a certain user into encrypted data which can be decrypted by a second user and transmits the encrypted data to the second user. The system enables multiple key replacements, prevents key replacement from being performed in a direction opposite from a defined direction, prevents information leak due to collusion between a user and the key replacement server, and enables information sharing among users to be performed in a secure manner even with intermediation of a third party such as a cloud as well as in a discrepancy-free manner despite complicated relations among the users (such as whether information access is or is not permitted).

In sum, it is possible to perform multiple key replacements for information sharing between users and to control the key replacement directions.

According to the descriptions provided herein, at least the following become apparent. Specifically, the key replacement direction control system of the embodiments may further comprise a key generation server including an arithmetic device that: generates a key replacement graph as the key replacement information and transmits the key replacement graph to the key replacement server, the key replacement graph having vertices representing identification information on the users and edges each representing the relation indicating permission and direction of information sharing; generates an encryption private key and a decryption master key for each of the users by using a predetermined algorithm and transmits the encryption private key and the decryption master key to the user terminal of the user; uses a hash code in the identification information on a first user and the decryption master key of a second user to generate the decryption key for use by the second user to decrypt encrypted data of the first user, and transmits the decryption key to the user terminal of the second user; and with respect to a first user and a second user who are, in the key replacement graph, linked to each other directly with an edge directed from the first user to the second user, generates the replacement key for use to re-encrypt encrypted data of the first user to enable the second user to decrypt the encrypted data, the arithmetic device generating the replacement key by performing a predetermined commutative operation on the decryption key for use by the second user to decrypt the encrypted data of the first user and the encryption private key of the first user and by using a result of the operation as the replacement key, and transmits the thus-generated replacement key to the key replacement server.

This allows the decryption keys and replacement keys to be efficiently generated according to the user configurations, and transmitted to the key replacement server and the user terminal.

Additionally, the key replacement direction control system of the embodiments may be configured such that, in the transmitting the replacement key to the key replacement server, with respect to a first user and a second user who are, in the key replacement graph, linked to each other with a third user interposed in between with an edge directed from the first user to the third user and an edge directed from the third user to the second user, the arithmetic device of the key generation server generates the replacement key for use to re-encrypt encrypted data of the first user to enable the second user to decrypt the encrypted data, the arithmetic device generating the replacement key by performing a predetermined commutative operation on the replacement key for use to re-encrypt the encrypted data of the first user to enable the third user to decrypt the encrypted data using the decryption key retained by the third user and the decryption key for use by the second user to decrypt data encrypted by the third user and by using a result of the operation as the replacement key, and transmits the thus-generated replacement key to the key replacement server.

In this case, even for users not directly linked in the key replacement graph, a replacement key can be generated so that the users can share information (if it is permitted), and transmitted to the key replacement server. Thus, there is no need to generate various keys for the relation of every set of users, which enables efficient, secure key management.

Additionally, the key replacement direction control system of the embodiments may further comprise a user terminal including: a storage device that stores the encryption private key, the decryption master key, and the decryption key, all transmitted from the key generation server; and an arithmetic device that registers encrypted data at the key replacement server by performing processing of generating ciphertext by encrypting predetermined data of a user of the user terminal using a key for symmetric-key cryptography generated by a predetermined algorithm, and processing of performing a predetermined commutative operation on the key for symmetric-key cryptography and the encryption private key retained in the storage device, generating the encrypted data by joining a result of the operation to the ciphertext, and transmitting the encrypted data to the key replacement server, decrypts re-encrypted encrypted data, which is encrypted data registered by an information sharer user and re-encrypted with the replacement key, by acquiring the re-encrypted encrypted data by sending an encrypted-data transmission request to the key replacement server, performing a predetermined commutative operation on the decryption key, stored in the storage device, for use by the user of the user terminal to decrypt the encrypted data of the information sharer user and a portion of the re-encrypted encrypted data, the portion being the result of the operation joined to the ciphertext, and decrypting the ciphertext using a result of the operation as a decryption key for symmetric-key cryptography, and outputs the decrypted ciphertext to an output device.

This allows users to efficiently share information in a secure manner in a direction defined.

Additionally, the key replacement direction control system of the embodiments may be configured such that, in the re-encrypting the encrypted data with the replacement key and transmitting the re-encrypted encrypted data to the user terminal of the different user, if the key replacement information defines that information sharing in the direction from the certain user to the different user is permitted, the arithmetic device of the key replacement server generates the re-encrypted encrypted data in response to the transmission request by performing a predetermined commutative operation on the replacement key for the users thus defined and the operation result joined to the ciphertext in the encrypted data and by joining a result of the operation to the ciphertext, and transmits the re-encrypted encrypted data to the user terminal of the different user.

This allows the key replacement server to generate re-encrypted encrypted data, or key-replaced encrypted data in an efficient and secure manner, and transmit the re-encrypted data to the user terminal.

Additionally, the key replacement direction control system of the embodiments may further comprise a key generation server including an arithmetic device that: generates a key replacement graph as the key replacement information and transmits the key replacement graph to the key replacement server, the key replacement graph having vertices representing identification information on the users and edges each representing the relation indicating permission and direction of information sharing; generates an encryption private key and a decryption master key for each of the users by using a predetermined algorithm and transmits the encryption private key and the decryption master key to the user terminal of the user; generates a decryption key for use by a second user to decrypt encrypted data of a first user, by performing processing of generating decryption partial keys for the respective first and second users using a predetermined algorithm and processing of performing a predetermined commutative operation on the decryption partial keys for the respective first and second users and of using a result of the operation as the decryption key, and transmits the decryption key to the user terminal of the second user; and with respect to a first user and a second user who are, in the key replacement graph, linked to each other directly with an edge directed from the first user to the second user, generates the replacement key for use to re-encrypt encrypted data of the first user to enable the second user to decrypt the encrypted data, the arithmetic device generating the replacement key by performing a predetermined commutative operation on the encryption private key of the first user and the decryption key generated and by using a result of the operation as the replacement key, and transmits the thus-generated replacement key to the key replacement server.

Compared to a case where a decryption key is generated from a decryption master key and a hash code in user identification information, this requires fewer keys overall and allows more efficient, secure key management.

Additionally, the key replacement direction control method of the embodiments may be executed by a key generation server and comprise: generating a key replacement graph as the key replacement information and transmitting the key replacement graph to the key replacement server, the key replacement graph having vertices representing identification information on the users and edges each representing the relation indicating permission and direction of information sharing; generating an encryption private key and a decryption master key for each of the users by using a predetermined algorithm and transmitting the encryption private key and the decryption master key to the user terminal of the user; using a hash code in the identification information on a first user and the decryption master key of a second user to generate the decryption key for use by the second user to decrypt encrypted data of the first user, and transmitting the decryption key to the user terminal of the second user; and with respect to a first user and a second user who are, in the key replacement graph, linked to each other directly with an edge directed from the first user to the second user, generating the replacement key for use to re-encrypt encrypted data of the first user to enable the second user to decrypt the encrypted data, the key generation server generating the replacement key by performing a predetermined commutative operation on the decryption key for use by the second user to decrypt the encrypted data of the first user and the encryption private key of the first user and by using a result of the operation as the replacement key, and transmitting the thus-generated replacement key to the key replacement server.

Additionally, the key replacement direction control method of the embodiments, in the transmitting the replacement key to the key replacement server, with respect to a first user and a second user who are, in the key replacement graph, linked to each other with a third user interposed in between with an edge directed from the first user to the third user and an edge directed from the third user to the second user, the key generation server may generate the replacement key for use to re-encrypt encrypted data of the first user to enable the second user to decrypt the encrypted data, the key generation server generating the replacement key by performing a predetermined commutative operation on the replacement key for use to re-encrypt the encrypted data of the first user to enable the third user to decrypt the encrypted data using the decryption key retained by the third user and the decryption key for use by the second user to decrypt data encrypted by the third user and by using a result of the operation as the replacement key, and transmit the thus-generated replacement key to the key replacement server.

Additionally, the key replacement direction control method of the embodiments may be executed by a user terminal including a storage device that stores the encryption private key, the decryption master key, and the decryption key, all transmitted from the key generation server, and the method may comprise: registering encrypted data at the key replacement server by performing processing of generating ciphertext by encrypting predetermined data of a user of the user terminal using a key for symmetric-key cryptography generated by a predetermined algorithm, and processing of performing a predetermined commutative operation on the key for symmetric-key cryptography and the encryption private key retained in the storage device, generating the encrypted data by joining a result of the operation to the ciphertext, and transmitting the encrypted data to the key replacement server; decrypting re-encrypted encrypted data, which is encrypted data registered by an information sharer user and re-encrypted with the replacement key, by acquiring the re-encrypted encrypted data by sending an encrypted-data transmission request to the key replacement server, performing a predetermined commutative operation on the decryption key, stored in the storage device, for use by the user of the user terminal to decrypt the encrypted data of the information sharer user and a portion of the re-encrypted encrypted data, the portion being the result of the operation joined to the ciphertext, and decrypting the ciphertext using a result of the operation as a decryption key for symmetric-key cryptography; and outputting the decrypted ciphertext to an output device.

Additionally, in the key replacement direction control method of the embodiments, in the re-encrypting the encrypted data with the replacement key and transmitting the re-encrypted data to the user terminal of the different user, if the key replacement information defines that information sharing in the direction from the certain user to the different user is permitted, the key replacement server generates the re-encrypted encrypted data in response to the transmission request by performing a predetermined commutative operation on the replacement key for the users thus defined and the operation result joined to the ciphertext in the encrypted data and by joining a result of the operation to the ciphertext, and transmits the re-encrypted encrypted data to the user terminal of the different user.

Additionally, the key replacement direction control method of the embodiments may be executed by a key generation server and comprise: generating a key replacement graph as the key replacement information and transmitting the key replacement graph to the key replacement server, the key replacement graph having vertices representing identification information on the users and edges each representing the relation indicating permission and direction of information sharing; generating an encryption private key and a decryption master key for each of the users by using a predetermined algorithm and transmitting the encryption private key and the decryption master key to the user terminal of a corresponding one of the users; generating a decryption key for use by a second user to decrypt encrypted data of a first user, by performing processing of generating decryption partial keys for the respective first and second users using a predetermined algorithm and processing of performing a predetermined commutative operation on the decryption partial keys for the respective first and second users and by using a result of the operation as the decryption key, and transmitting the decryption key to the user terminal of the second user; and with respect to a first user and a second user who are, in the key replacement graph, linked to each other directly with an edge directed from the first user to the second user, generating the replacement key for use to re-encrypt encrypted data of the first user to enable the second user to decrypt the encrypted data, the key generation server generating the replacement key by performing a predetermined commutative operation on the encryption private key of the first user and the decryption key generated and by using a result of the operation as the replacement key, and transmitting the thus-generated replacement key to the key replacement server.

### [Reference Signs List]

- 10: computer
- 11: storage device
- 12: programs
- 13: memory
- 14: arithmetic device
- 15: input device
- 16: output device
- 17: communication device
- 18: data
- 100: key replacement direction control system
- 150: network
- 200: key replacement server
- 201: input part
- 202: output part
- 203: communication part
- 210: control part
- 211: overall processor
- 212: key replacement processor
- 220: storage part
- 230: data storage section
- 231: encrypted data
- 232: replacement key table
- 233: key replacement graph
- 240: temporary information storage section
- 300: user terminal
- 301: input part
- 302: output part
- 303: communication part
- 310: control part
- 311: overall processor
- 312: encryption processor
- 313: decryption processor
- 320: storage part
- 330: data storage section
- 340: encryption/decryption key storage section
- 341: encryption key
- 342: decryption key
- 350: temporary information storage section
- 1000: key generation server
- 1001: input part
- 1002: output part
- 1003: communication part
- 1010: control part
- 1011: overall processor
- 1012: encryption key generator
- 1013: decryption key generator
- 1014: replacement key generator
- 1020: storage part
- 1040: decryption/encryption key storage section
- 1041: encryption key
- 1042: decryption key
- 1050: temporary information storage section

## Claims

1. A key replacement direction control system **characterized in that** the system comprises a key replacement server including:
a storage device that stores
key replacement information defining a relation indicating permission and direction of information sharing between users,
a replacement key for a first user and a second user who are defined in the key replacement information such that information sharing in a direction from the first user to the second user is permitted, the replacement key being for use to re-encrypt encrypted data of the first user to enable the second user to decrypt the encrypted data using a decryption key retained by the second user, and
encrypted data of at least one of the users; and an arithmetic device that
receives a transmission request for transmission of encrypted data of a certain user, from a user terminal of a different user,
if the key replacement information defines that information sharing in a direction from the certain user to the different user is permitted, re-encrypts the encrypted data of the certain user using the replacement key for the users thus defined, and
transmits the re-encrypted encrypted data to the user terminal of the different user.

2. The key replacement direction control system according to claim 1, **characterized in that** the system further comprises a key generation server including an arithmetic device that:
generates a key replacement graph as the key replacement information and transmits the key replacement graph to the key replacement server, the key replacement graph having vertices representing identification information on the users and edges each representing the relation indicating permission and direction of information sharing;
generates an encryption private key and a decryption master key for each of the users by using a predetermined algorithm and transmits the encryption private key and the decryption master key to the user terminal of the user;
uses a hash code in the identification information on a first user and the decryption master key of a second user to generate the decryption key for use by the second user to decrypt encrypted data of the first user, and transmits the decryption key to the user terminal of the second user; and
with respect to a first user and a second user who are, in the key replacement graph, linked to each other directly with an edge directed from the first user to the second user, generates the replacement key for use to re-encrypt encrypted data of the first user to enable the second user to decrypt the encrypted data, the arithmetic device generating the replacement key by performing a predetermined commutative operation on the decryption key for use by the second user to decrypt the encrypted data of the first user and the encryption private key of the first user and by using a result of the operation as the replacement key, and transmits the thus-generated replacement key to the key replacement server.

3. The key replacement direction control system according to claim 2, **characterized in that**
in the transmitting the replacement key to the key replacement server,
with respect to a first user and a second user who are, in the key replacement graph, linked to each other with a third user interposed in between with an edge directed from the first user to the third user and an edge directed from the third user to the second user, the arithmetic device of the key generation server generates the replacement key for use to re-encrypt encrypted data of the first user to enable the second user to decrypt the encrypted data, the arithmetic device generating the replacement key by performing a predetermined commutative operation on the replacement key for use to re-encrypt the encrypted data of the first user to enable the third user to decrypt the encrypted data using the decryption key retained by the third user and the decryption key for use by the second user to decrypt data encrypted by the third user and by using a result of the operation as the replacement key, and transmits the thus-generated replacement key to the key replacement server.

4. The key replacement direction control system according to claim 2, **characterized in that** the system further comprises a user terminal including:
a storage device that stores the encryption private key, the decryption master key, and the decryption key, all transmitted from the key generation server; and
an arithmetic device that
registers encrypted data at the key replacement server by performing
processing of generating ciphertext by encrypting predetermined data of a user of the user terminal using a key for symmetric-key cryptography generated by a predetermined algorithm, and
processing of performing a predetermined commutative operation on the key for symmetric-key cryptography and the encryption private key retained in the storage device, generating the encrypted data by joining a result of the operation to the ciphertext, and transmitting the encrypted data to the key replacement server,
decrypts re-encrypted encrypted data, which is encrypted data registered by an information sharer user and re-encrypted with the replacement key, by
acquiring the re-encrypted encrypted data by sending an encrypted-data transmission request to the key replacement server,
performing a predetermined commutative operation on the decryption key, stored in the storage device, for use by the user of the user terminal to decrypt the encrypted data of the information sharer user and a portion of the re-encrypted encrypted data, the portion being the result of the operation joined to the ciphertext, and
decrypting the ciphertext using a result of the operation as a decryption key for symmetric-key cryptography, and
outputs the decrypted ciphertext to an output device.

5. The key replacement direction control system according to claim 4, **characterized in that**
in the re-encrypting the encrypted data with the replacement key and transmitting the re-encrypted encrypted data to the user terminal of the different user,
if the key replacement information defines that information sharing in the direction from the certain user to the different user is permitted, the arithmetic device of the key replacement server generates the re-encrypted encrypted data in response to the transmission request by performing a predetermined commutative operation on the replacement key for the users thus defined and the operation result joined to the ciphertext in the encrypted data and by joining a result of the operation to the ciphertext, and transmits the re-encrypted encrypted data to the user terminal of the different user.

6. The key replacement direction control system according to claim 1, **characterized in that** the system further comprises a key generation server including an arithmetic device that:
generates a key replacement graph as the key replacement information and transmits the key replacement graph to the key replacement server, the key replacement graph having vertices representing identification information on the users and edges each representing the relation indicating permission and direction of information sharing;
generates an encryption private key and a decryption master key for each of the users by using a predetermined algorithm and transmits the encryption private key and the decryption master key to the user terminal of a corresponding one of the users;
generates a decryption key for use by a second user to decrypt encrypted data of a first user, by performing processing of generating decryption partial keys for the respective first and second users using a predetermined algorithm and processing of performing a predetermined commutative operation on the decryption partial keys for the respective first and second users and of using a result of the operation as the decryption key, and transmits the decryption key to the user terminal of the second user; and
with respect to a first user and a second user who are, in the key replacement graph, linked to each other directly with an edge directed from the first user to the second user, generates the replacement key for use to re-encrypt encrypted data of the first user to enable the second user to decrypt the encrypted data, the arithmetic device generating the replacement key by performing a predetermined commutative operation on the encryption private key of the first user and the decryption key generated and by using a result of the operation as the replacement key, and transmits the thus-generated replacement key to the key replacement server.

7. A key replacement direction control method **characterized in that**
the method is executed by a key replacement server that includes a storage device that stores key replacement information defining a relation indicating permission and direction of information sharing between users, a replacement key for a first user and a second user who are defined in the key replacement information such that information sharing in a direction from the first user to the second user is permitted, the replacement key being for use to re-encrypt encrypted data of the first user to enable the second user to decrypt the encrypted data using a decryption key retained by the second user, and encrypted data of at least one of the users, and
the method comprises:
receiving a transmission request for transmission of encrypted data of a certain user, from a user terminal of a different user;
if the key replacement information defines that information sharing in a direction from the certain user to the different user is permitted, re-encrypting the encrypted data of the certain user using the replacement key for the users thus defined; and
transmitting the re-encrypted encrypted data to the user terminal of the different user.

8. The key replacement direction control method according to claim 7, **characterized in that**
the method is executed by a key generation server, and
the method comprises:
generating a key replacement graph as the key replacement information and transmitting the key replacement graph to the key replacement server, the key replacement graph having vertices representing identification information on the users and edges each representing the relation indicating permission and direction of information sharing;
generating an encryption private key and a decryption master key for each of the users by using a predetermined algorithm and transmitting the encryption private key and the decryption master key to the user terminal of the user;
using a hash code in the identification information on a first user and the decryption master key of a second user to generate the decryption key for use by the second user to decrypt encrypted data of the first user, and transmitting the decryption key to the user terminal of the second user; and
with respect to a first user and a second user who are, in the key replacement graph, linked to each other directly with an edge directed from the first user to the second user, generating the replacement key for use to re-encrypt encrypted data of the first user to enable the second user to decrypt the encrypted data, the key generation server generating the replacement key by performing a predetermined commutative operation on the decryption key for use by the second user to decrypt the encrypted data of the first user and the encryption private key of the first user and by using a result of the operation as the replacement key, and transmitting the thus-generated replacement key to the key replacement server.

9. The key replacement direction control method according to claim 8, **characterized in that**
in the transmitting the replacement key to the key replacement server,
with respect to a first user and a second user who are, in the key replacement graph, linked to each other with a third user interposed in between with an edge directed from the first user to the third user and an edge directed from the third user to the second user, the key generation server generates the replacement key for use to re-encrypt encrypted data of the first user to enable the second user to decrypt the encrypted data, the key generation server generating the replacement key by performing a predetermined commutative operation on the replacement key for use to re-encrypt the encrypted data of the first user to enable the third user to decrypt the encrypted data using the decryption key retained by the third user and the decryption key for use by the second user to decrypt data encrypted by the third user and by using a result of the operation as the replacement key, and transmits the thus-generated replacement key to the key replacement server.

10. The key replacement direction control method according to claim 8, **characterized in that**
the method is executed by a user terminal including a storage device that stores the encryption private key, the decryption master key, and the decryption key, all transmitted from the key generation server, and
the method comprises:
registering encrypted data at the key replacement server by performing
processing of generating ciphertext by encrypting predetermined data of a user of the user terminal using a key for symmetric-key cryptography generated by a predetermined algorithm, and
processing of performing a predetermined commutative operation on the key for symmetric-key cryptography and the encryption private key retained in the storage device, generating the encrypted data by joining a result of the operation to the ciphertext, and transmitting the encrypted data to the key replacement server;
decrypting re-encrypted encrypted data, which is encrypted data registered by an information sharer user and re-encrypted with the replacement key, by
acquiring the re-encrypted encrypted data by sending an encrypted-data transmission request to the key replacement server,
performing a predetermined commutative operation on the decryption key, stored in the storage device, for use by the user of the user terminal to decrypt the encrypted data of the information sharer user and a portion of the re-encrypted encrypted data, the portion being the result of the operation joined to the ciphertext, and
decrypting the ciphertext using a result of the operation as a decryption key for symmetric-key cryptography; and
outputting the decrypted ciphertext to an output device.

11. The key replacement direction control method according to claim 10, **characterized in that**
in the re-encrypting the encrypted data with the replacement key and transmitting the re-encrypted encrypted data to the user terminal of the different user,
if the key replacement information defines that information sharing in the direction from the certain user to the different user is permitted, the key replacement server generates the re-encrypted encrypted data in response to the transmission request by performing a predetermined commutative operation on the replacement key for the users thus defined and the operation result joined to the ciphertext in the encrypted data and by joining a result of the operation to the ciphertext, and transmits the re-encrypted encrypted data to the user terminal of the different user.

12. The key replacement direction control method according to claim 7, **characterized in that**
the method is executed by a key generation server, and
the method comprises:
generating a key replacement graph as the key replacement information and transmitting the key replacement graph to the key replacement server, the key replacement graph having vertices representing identification information on the users and edges each representing the relation indicating permission and direction of information sharing;
generating an encryption private key and a decryption master key for each of the users by using a predetermined algorithm and transmitting the encryption private key and the decryption master key to the user terminal of a corresponding one of the users;
generating a decryption key for use by a second user to decrypt encrypted data of a first user, by performing processing of generating decryption partial keys for the respective first and second users using a predetermined algorithm and processing of performing a predetermined commutative operation on the decryption partial keys for the respective first and second users and by using a result of the operation as the decryption key, and transmitting the decryption key to the user terminal of the second user; and
with respect to a first user and a second user who are, in the key replacement graph, linked to each other directly with an edge directed from the first user to the second user, generating the replacement key for use to re-encrypt encrypted data of the first user to enable the second user to decrypt the encrypted data, the key generation server generating the replacement key by performing a predetermined commutative operation on the encryption private key of the first user and the decryption key generated and by using a result of the operation as the replacement key, and transmitting the thus-generated replacement key to the key replacement server.
